# EUROPEAN PATENT SPECIFICATION

(11) **EP 4 338 141 B1**
(45) Date of publication and mention of the grant of the patent: **28.08.2024**
(21) Application number: 22723807.8
(22) Date of filing: 10.05.2022
(51) Int. Cl.: G07F 13/10, G07F 13/06, H01R 13/627

(54) **AUTOMATIC BEVERAGE VENDING MACHINE**
GETRÄNKEVERKAUFSAUTOMAT
DISTRIBUTEUR AUTOMATIQUE DE BOISSONS

(30) Priority: 10.05.2021 IT 202100011945
(43) Date of publication of application: 20.03.2024
(73) Proprietor: Rheavendors Industries S.p.A., 22100 Como (IT)
(72) Inventor: BRUZZESE, Fabio, 22100 Como (IT); MAGGIONI, Claudio, 22100 Como (IT); RIVA, Roberto, 22100 Como (IT); PIATTI, Gianluca, 22100 Como (IT); MOLINATI, Carlo Moreno, 22100 Como (IT); BELTRAME, Claudio, 22100 Como (IT)
(74) Representative: Studio Torta S.p.A.
(86) International application number: PCT/IB2022/054325
(87) International publication number: WO 2022/238887

(56) References cited:
- EP-A1- 2 296 120
- EP-A1- 2 369 559
- EP-A2- 2 645 343
- US-A- 2 426 707
- US-A- 2 559 063
- US-A- 3 638 448
- US-B1- 6 209 979
- US-B1- 6 550 638

## Description

### Cross-reference to Related Applications

This patent application claims priority from Italian patent application no. 102021000011945 filed on May 10, 2021.

### Technical Field of the Invention

The present invention relates to an automatic beverage vending machine.

### State of the Art

As is known, the automatic beverage vending machines comprise a cabinet or container, which has a front access opening closed by a door and houses a plurality of assemblies for producing beverages.

Each cabinet also houses one or more different sub-assemblies that can be configured during the assembly of the vending machine according to the purchaser's requirements.

Examples of these sub-assemblies and the relative configurations may be:
- a dispenser of paper or plastic cups of different diameters, for example. 58mm, 70mm, 73mm and 80mm; the cup dispenser can then be with a single turret or with two or more turrets for feeding the same cups;
- a dispenser of lids for closing the cups. In some embodiments, such a lid dispenser may not be provided; and
- a dispenser of stir sticks of different sizes, is also present or not depending on the application.

The above sub-assemblies have support and attachment structures, which are in some cases connected to portions of the cabinet or to attachment frames also housed in the cabinet, or are connected to the door to move together with the door itself.

The connection to the door is generally preferred as the opening of the door makes the sub-assemblies directly and easily accessible.

Regardless of the arrangement of the sub-assemblies, they are fixed to the relative attachment frames or to the door by means of connecting elements such as screws, pins, Seeger rings.

The insertion of these elements is subject to the use of tools and implements that are not always easy to use because of the compactness of the known vending machines and therefore of the reduced space for manoeuvre.

An automatic beverage vending machine is described in document US 2,426,707 A, while document EP 2 369 559 A1 describes an automatic beverage vending machine in which two parts are connected to each other by pins sliding in overturned keyhole slots.

Document EP 2 645 343 A2 describes a snap-on quick coupling device having a sliding slot for a retention peg and snap-on locking teeth of the peg within the slot.

Document US 6,209,979 B1 describes a quick-mount system for a telescoping slide.

The Applicant has been able to ascertain that, although they guarantee high stability, such connecting elements do not allow, however, to satisfy the ever-increasing need to be able to install sub-assemblies in a short time, but above all to be able to replace sub-assemblies in machines already in operation so as to reconfigure or retro-fit them, that is to say to adapt them easily and quickly to new dispensing requirements, with low efforts on the part of the operator and without the need to use loose fasteners and mechanical tools and mechanical implements for the insertion and extraction of these fasteners.

### Subject and Summary of the Invention

Aim of the present invention is to realize an automatic beverage vending machine, which enables the problems set out above to be solved in a simple and economical manner so as to be able to meet the need indicated above.

According to the present invention, an automatic beverage vending machine is realized, as claimed in the appended claims.

### Brief Description of the Drawings

Figure 1 is a perspective view, with parts removed for clarity's sake, of a preferred embodiment of an automatic beverage vending machine realized according to the dictates of the present invention.
Figure 2 is a perspective view, on an enlarged scale, of a detail of Figure 1 with parts decoupled for clarity's sake.
Figures 3 to 5 show, in front view, a coupling device of parts of the beverage vending machine of Figure 1 arranged in three different coupling conditions.
Figure 6 is a section, on a greatly enlarged scale, according to the line VI-VI of Figure 5 with parts removed for clarity's sake.
Figures 7 and 8 show, on an enlarged scale and with parts removed for clarity's sake, two different details of Figure 3 and Figure 5, respectively.

### Detailed Description of Preferred Embodiments of the Invention

The present invention will now be described in detail with reference to the accompanying figures to allow a skilled person to make and use it. Various modifications of the embodiment described will be immediately clear to the skilled person and the general principles disclosed can be applied to other embodiments and applications without departing from the protection scope of the present invention, as defined in the enclosed drawings. Therefore, the present invention shall not be limited to the shown and described embodiments, but it must be granted the widest protection scope in accordance with the features disclosed and claimed.

Unless otherwise defined, all the herein used technical and scientific terms have the same meaning commonly used by the ordinary skilled in the art of the present invention. In case of conflict, the present invention, including definitions provided, will be binding. Furthermore, the examples are provided for merely illustrative purposes and must not be regarded as limiting.

In order to ease the understanding of the herein described embodiments, reference will be made to some specific embodiments and a specific language will be used to describe them. The terminology used in the present document aims at describing only particular implementations, and is not intended to limit the scope of the present invention.

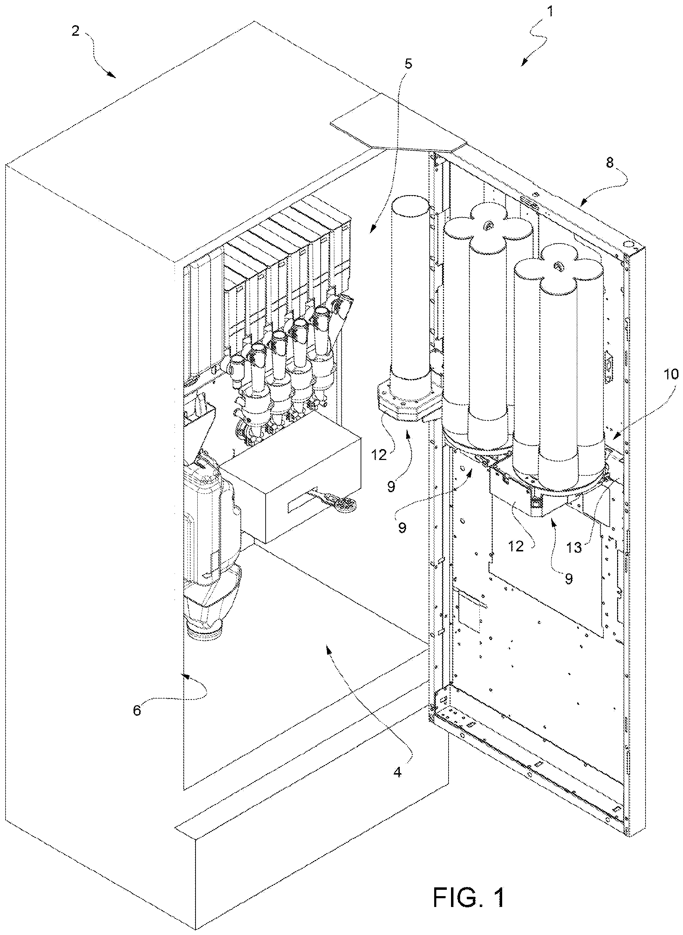

In Figures 1, reference number **1** denotes an automatic beverage vending machine as a whole.

The automatic beverage vending machine **1** comprises a cabinet **2,** in turn, comprising a box-shaped body **3** and a chamber **4** housing an assembly for preparing and dispensing one or more beverages, per se known and not described in detail and indicated by reference number **5.**

The chamber **4** communicates with the outside through an access opening **6** closed by a flap door **8,** which forms part of the cabinet **2.**

The automatic beverage vending machine **1** also comprises three turret dispensing assemblies **9,** commonly known as "feeding sub-assemblies", for feeding paper or plastic cups of different sizes and, depending on the applications, also lids for closing the same cups and stir sticks. However, the dispensing assemblies of the closing lid and sticks may be missing.

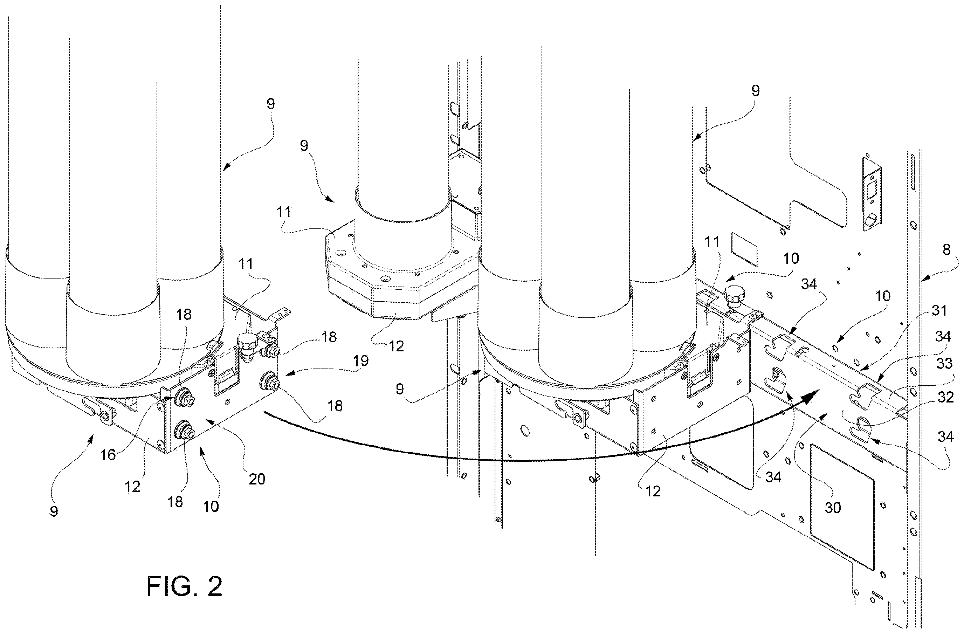

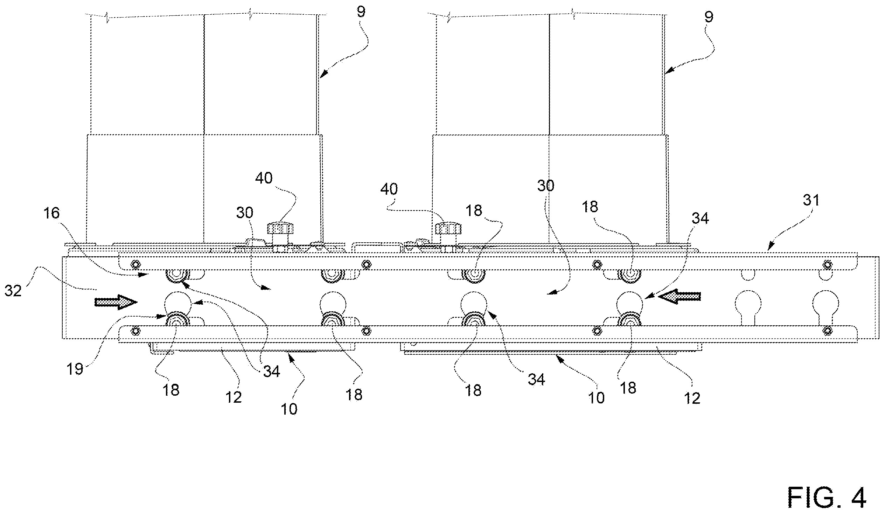

The dispensing assemblies **9** are carried by the door **8** and each is connected to the door **8** in a releasable or dismountable manner by a respective quick coupling and locking device **10** (Figures 2 and 3 to 6) independent of the other quick coupling and locking devices **10.**

In particular, each dispensing assembly **9** comprises a dispensing base **11,** per se known and not described, and its own attachment frame **12** partially or completely housing the relative dispensing base **11.**

Each quick coupling and locking device **10** comprises an upper pair **16** of retention pins **18** and a lower pair **19** of retention pins **18** vertically spaced from one another. The pins **18** protrude in a cantilever fashion from a surface **20** of the frame **12** facing the door **8.**

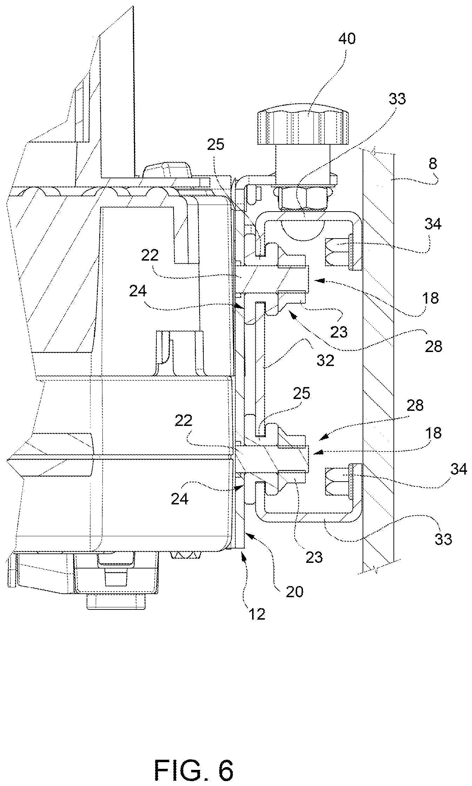

With reference to Figure 6, each retention pin **18** comprises a shaft **22,** which is stably connected to the frame **12** and ends with an externally threaded segment, onto which a tightening nut **23** is screwed. Conveniently, a shaped collar **24,** preferably, but not necessarily, made of an anti-friction material, is fitted on the shaft **22** and tightened against the surface **20** of the frame **12** by the relative nut **23.** Each collar **24** has, in cross-section, a substantially **H** shape (Figure 6) and comprises a central cylindrical portion **25** and two lateral circular flanges **26** and **27,** of which the flange **27** has an outer diameter smaller than the outer diameter of the flange **26** and is positioned abutting against the relative nut **23** in order to define, with the nut **23** itself, an attachment head **28** of the relative retention pin **18.**

The flange **26,** on the other hand, is positioned abutting against the surface **20** and delimits, with the cylindrical annular portion **25** and with the flange **27,** a circumferential groove **29.**

According to a variant not shown, each retention pin **18** is free of its relative collar **24** and the attachment head **28** is defined only by the nut **23.**

Still with reference to Figures 2 and 3 to 5, each quick coupling and locking device **10** further comprises a relative shaped attachment plate **30** of the pins **18** and fixed to the door **8.**

Conveniently, the shaped plates **30** constitute consecutive segments of a shaped crosspiece **31** that is common to all the dispensing assemblies **9** and stably connected to the door **8.**

According to a variant, not shown, the shaped attachment plates **30** are separated from each other and each stably connected to the door **8.**

Regardless of whether they are separated or parts of a single crosspiece **31,** each shaped plate **30** is C-shaped (Figures 2 and 6) and comprises a vertical intermediate wall **32** and two horizontal side walls or wings **33** stably connected to the door 8 by means of nuts **34A.**

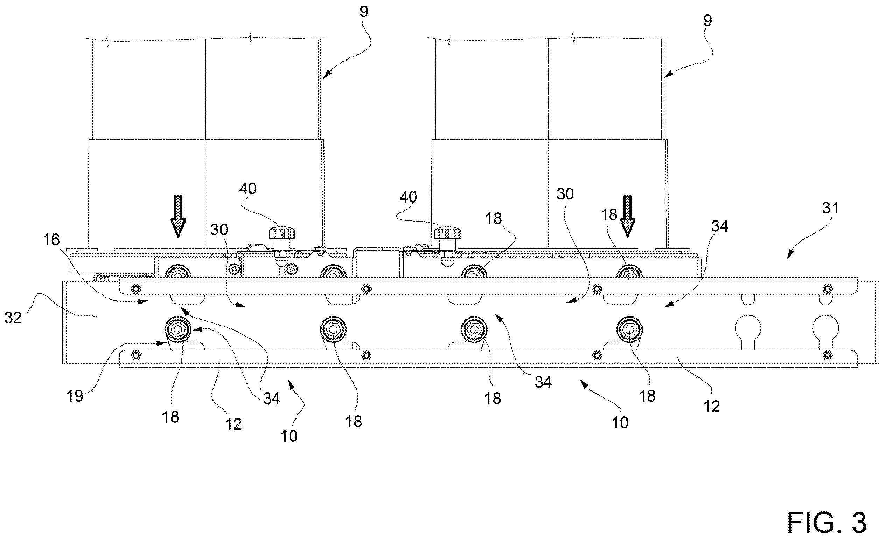

Each intermediate wall **32** comprises, for each retention pin **18,** a relative shaped retention and guide slot of the relative pin **18,** indicated by **34** (Figures 3 to 5 and 7).

Each slot **34** comprises a vertical segment **35,** a horizontal segment **36** and an inlet passage **37** arranged above the vertical segment **35** and communicating with the vertical segment **35** itself.

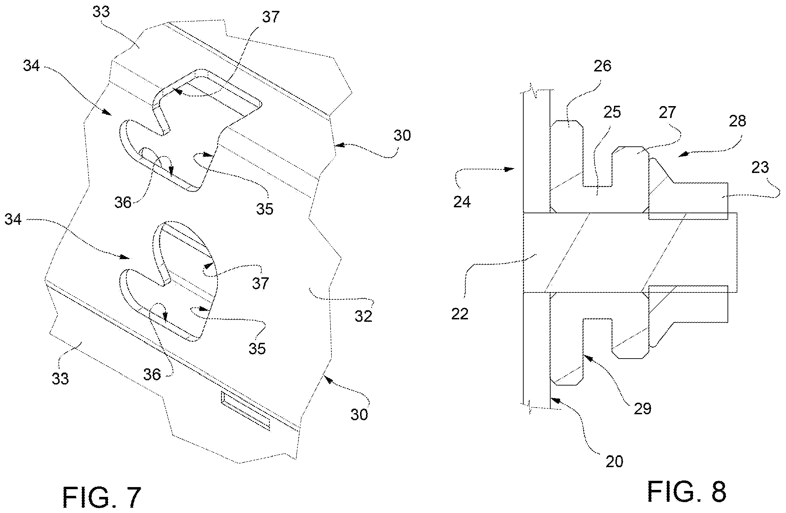

With particular reference to Figure 7, part of the inlets **37** is obtained on the intermediate wall **32,** the remaining part of the inlets **37** is obtained through the upper wing **33.** The inlets **37** obtained through the wing **33** are inlets which are open upwards so as to allow the relative attachment head **28** to be inserted into the respective slot **34** by simply sliding in a vertical direction.

According to a variant not shown, all the inlets are obtained on the intermediate wall **32.**

In any case, each inlet **37** is configured to be crossed by the attachment head **28** of the relative pin **18,** i.e. by the relative nut **23** and by the relative flange **27,** but not by the relative flange **26.**

The segments **35** and **36,** on the other hand, are shaped so as to have a width approximating by excess the outer diameter of the relative tubular portion **25** so as to allow the tubular portion **25** itself to slide freely within the segments **35** and **36.**

In the absence of the collars **24,** the segments **35** and **36** have a width approximating by excess the shaft diameter **22.**

Considering for the sake of exposition only one dispensing assembly **9,** the assembly and disassembly of the dispensing assembly **9** itself are carried out as follows.

With reference to Figure 3, the frame **12** is brought into a position facing the crosspiece **31** by arranging the attachment heads **28** of the pins **18** at the relative inlets **37,** after which the frame **12** is pushed against the crosspiece **31** and the attachment heads **28** of the pins advanced through the relative inlets **37** until the flanges **26** are brought against the wall **32.**

At this point, the frame **12** is lowered by advancing the tubular portions **25** of the pins **18,** firstly, along the vertical segments **35** until they rest on the horizontal segments **36** and, then, it is translated horizontally by moving the tubular portions **25** themselves inside the horizontal segments **36** until they are brought in abutment against the bottom surfaces of the horizontal segments **36** themselves.

Secondly, a variant not shown, the segments **35** and **36** extend along directions together forming an angle other than zero and 90°.

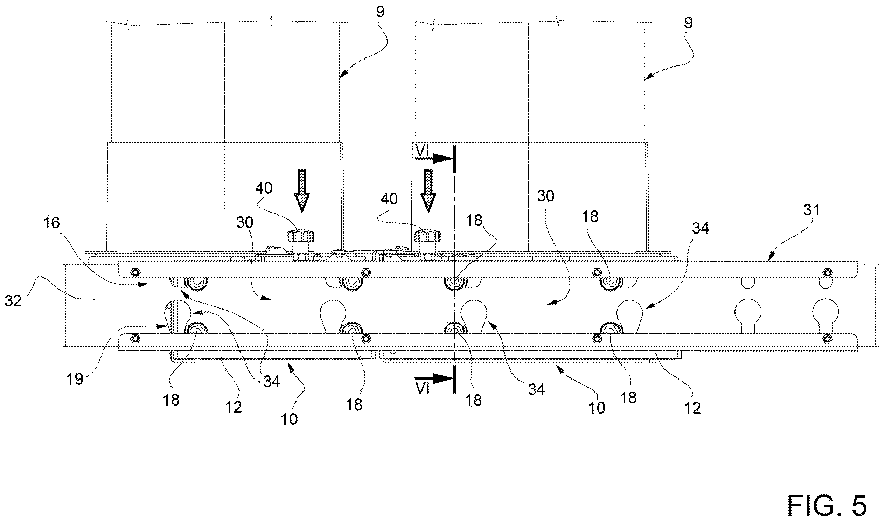

In this way, the pins **18** and thus the frame **12** are guided along predefined and invariant paths that bring the dispensing assembly **9** into a precise functional position. When the pins **18** are positioned abutting against the bottom surfaces of the segments **36,** a locking pin **40** carried by the frame **12** and forming part of the quick coupling and locking device **10** is lowered and inserted into a retention seat obtained on the upper wing **33** of the crosspiece **31,** as shown in Figure 5.

Conveniently, each pin **40** is loaded with a spring so as to snap into its retention seat when the pins **18** reach the bottom surfaces of the segments **36.**

From the foregoing, it is evident that the quick coupling and locking devices **10** allow each of the dispensing assemblies **9** to be installed/removed and replaced independently of each other without using any loose fasteners and without the use of any tools and mechanical implements.

In addition to this, each quick coupling and locking device **10** allows each dispensing assembly **9** to be arranged and locked in a unique and invariant position without the need for references and without attention on the part of the installer.

This facilitates, firstly, the operations for assembly or for the initial equipment of the vending machine 1, reducing the times, but above all, it allows the quick replacement of the dispensing assemblies **9** in machines already operating in service areas so as to reconfigure or retro-fit them, adapting them easily and quickly to new dispensing requirements and with low efforts on the part of the operator, who simply has to extract the peg **40** and decouple the entire dispensing assembly **9** by simply translation, lifting and replacement thereof with another dispensing assembly by repeating the same operations in reverse order.

From the foregoing, it is also evident that modifications and variations can be made without thereby leaving the protective scope defined by the independent claims. In particular, the retention pins **18** could be configured in a manner different from that shown, but still in order to form part of a sliding engagement and could be in a number different from that shown.

The same slots **35** and **36** could have geometries different from those shown.

Still, the automatic beverage vending machine **1** could comprise only one dispensing assembly **9.**

Finally, the retention pins **18** could be carried by the shaped retention plates **30** and the slots **35** and **36** and the relative inlets **37** carried by the frame **12** of the dispensing assembly **9.**

Finally, the pins **40** could be carried by the shaped retention plate **30** and the relative retention seat be carried by the dispensing assembly **9.**

## Claims

1. A beverage vending machine **(1)** comprising a box-shaped body **(3)** delimiting a housing chamber **(4)** and an opening **(6)** for access to said chamber **(4);** a door **(8)** for closing said access opening **(6);** at least one dispensing assembly **(9)** having bodies for containing/mixing said beverages and connection means for connecting said dispensing assembly **(9)** to said closing door **(8)** or to said box-shaped body **(3),** said connection means comprising a quick coupling and locking device **(10);** the quick coupling and locking device **(10)** comprising:
- an upper pair **(16)** of retention pins **(18)** and a lower pair **(19)** of retention pins **(18)** vertically spaced from one another, each retention pin **(18)** being stably connected to one between said dispensing assembly **(9)** and said closing door **(8)** or said box-shaped body **(3),** and
- a shaped retention plate **(30)** stably connected to the other between said dispensing assembly **(9)** and said closing door **(8)** or said box-shaped body **(3),** the shaped retention plate **(30)** being C-shaped and comprising a vertical intermediate wall **(32)** and two horizontal wings **(33)** stably connected to said other between said dispensing assembly **(9)** and said closing door **(8)** or said box-shaped body **(3),**
the shaped retention plate **(30)** delimiting for each said retention pin **(18)** at least one guide slot **(34)** for guiding the relative retention pin **(18),**
each guide slot **(34)** comprising a vertical segment **(35),** a horizontal segment **(36)** and an inlet passage **(37)** arranged above the vertical segment **(35)** and communicating with the vertical segment **(35)** itself,
the retention plate **(30)** delimiting upper guide slots **(34)** adapted for receiving the retention pins **(18)** of said upper pair **(16)** and lower guide slots **(34)** adapted for receiving the retention pins **(18)** of said lower pair **(19),**
each said retention pin **(18)** comprising a shaft **(22)** engaging the respective guide slot **(34)** in a slidable manner, and an attachment head **(28)** positioned abutting against a portion of said shaped plate **(30)** delimiting the respective guide slot **(34)** and insertable through the respective inlet passage **(37);**
each said attachment head **(28)** comprising a portion **(24)** provided with a circumferential groove **(29)** engaged in a slidable manner by portions of said shaped retention plate **(30)** delimiting the respective guide slot **(34),** the circumferential groove **(29)** being laterally delimited between a first circular flange **(26)** and a second circular flange **(27),** the second flange **(27)** having an outer diameter smaller than the outer diameter of the first flange **(26),**
wherein each inlet passage **(37)** is configured to be crossed by the attachment head **(28)** of the relative retention pin **(18)** in such a way that the second flange **(27)** crosses the inlet passage **(37)** whereas the first flange **(26)** does not cross the inlet passage **(37),**
wherein each vertical segment **(35)** and each a horizontal segment **(36)** are shaped so as to have a width approximating by excess the outer diameter of each relative circumferential groove **(29)** so as to allow the relative circumferential groove **(29)** to slide freely within the vertical segment **(35)** and the horizontal segment **(36),**
each said upper guide slot **(34)** having a said inlet passage **(37)** which is open upwards and which is obtained partly through the intermediate wall **(32)** and partly through an upper wing of said horizontal wings **(33);**
the attachment head **(28)** of each retention pin **(18)** of said upper pair **(16)** being insertable from above through said inlet passage **(37)** which is open upwards of the respective said upper guide slot **(34),**
wherein the beverage vending machine **(1)** further comprises releasable locking means **(40)** being provided for locking said shafts **(22)** in said guide slot **(34).**

2. The vending machine according to claim **1, characterised in that** the releasable locking means comprise a stop pin **(40)** carried by one between said dispensing assembly **(9)** and said retention plate **(30)** and a retention seat engaged in a releasable manner by said pin **(40)** and obtained on the other between said dispensing assembly **(9)** and said retention plate **(30).**

3. The vending machine according to any one of the preceding claims, **characterised in that** said shaped retention plate **(30)** is stably connected to said door **(8)** and **in that** said dispensing assembly **(9)** comprises an attachment structure **(12),** to which the shafts **(22)** of said retention pins **(18)** are stably connected in a cantilever fashion.

4. The vending machine according to any one of the preceding claims, **characterised in that** each said shaft **(22)** comprises a stem and said attachment head **(28)** comprises a nut **(23)** screwed onto said stem.

## Patentansprüche

1. Getränkeverkaufsautomat **(1),** umfassend einen kastenförmigen Körper **(3),** der eine Gehäusekammer **(4)** und eine Öffnung **(6)** für einen Zugang zu der Kammer **(4)** begrenzt; eine Tür **(8)** zum Verschließen der Zugangsöffnung **(6);** mindestens eine Abgabeanordnung **(9),** die Körper zum Enthalten/Mischen der Getränke und Verbindungsmittel zum Verbinden der Abgabeanordnung **(9)** mit der Verschlusstür **(8)** oder mit dem kastenförmigen Körper **(3)** aufweist, die Verbindungsmittel umfassend eine Schnellkopplungs- und Verriegelungsvorrichtung **(10);** die Schnellkopplungs- und Verriegelungsvorrichtung **(10)** umfassend:
- ein oberes Paar **(16)** von Haltestiften **(18)** und ein unteres Paar **(19)** von Haltestiften **(18),** die vertikal voneinander beabstandet sind, wobei jeder Haltestift **(18)** mit einem von der Abgabeanordnung **(9)** und der Verschlusstür **(8)** oder dem kastenförmigen Körper **(3)** stabil verbunden ist, und
- eine geformte Halteplatte **(30),** die mit dem anderen von der Abgabeanordnung **(9)** und der Verschlusstür **(8)** oder dem kastenförmigen Körper **(3)** stabil verbunden ist, wobei die geformte Halteplatte **(30)** C-förmig ist und eine vertikale Zwischenwand **(32)** und zwei horizontale Flügel **(33)** umfasst, die mit dem anderen von der Abgabeanordnung **(9)** und der Verschlusstür **(8)** oder dem kastenförmigen Körper **(3)** stabil verbunden sind,
wobei die geformte Halteplatte **(30)** für jeden Haltestift **(18)** mindestens einen Führungsschlitz **(34)** zum Führen des jeweiligen Haltestifts **(18)** begrenzt,
jeder Führungsschlitz **(34)** umfassend ein vertikales Segment **(35),** ein horizontales Segment **(36)** und einen Einlasskanal **(37),** der über dem vertikalen Segment **(35)** angeordnet ist und mit dem vertikalen Segment **(35)** selbst in Kommunikation steht,
wobei die Halteplatte **(30)** obere Führungsschlitze **(34),** die zum Aufnehmen der Haltestifte **(18)** des oberen Paars **(16)** angepasst sind, und untere Führungsschlitze **(34)** begrenzt, die zum Aufnehmen der Haltestifte **(18)** des unteren Paars **(19)** angepasst sind,
jeder Haltestift **(18)** umfassend einen Schaft **(22),** der den jeweiligen Führungsschlitz **(34)** auf eine gleitende Weise in Eingriff nimmt, und einen Befestigungskopf **(28),** der an einem Abschnitt der geformten Platte **(30)** anliegend positioniert ist, der den jeweiligen Führungsschlitz **(34)** begrenzt, und durch den jeweiligen Einlasskanal **(37)** einführbar ist;
jeder Befestigungskopf **(28)** umfassend einen Abschnitt **(24),** der mit einer umlaufenden Nut **(29)** versehen ist, die auf eine gleitende Weise durch Abschnitte der geformten Halteplatte **(30)** in Eingriff genommen wird, die den jeweiligen Führungsschlitz **(34)** begrenzen, wobei die umlaufende Nut **(29)** zwischen einem ersten kreisförmigen Flansch **(26)** und einem zweiten kreisförmigen Flansch **(27)** seitlich begrenzt ist, wobei der zweite Flansch **(27)** einen Außendurchmesser aufweist, der kleiner als der Außendurchmesser des ersten Flansches **(26)** ist,
wobei jeder Einlasskanal **(37)** konfiguriert ist, um durch den Befestigungskopf **(28)** des jeweiligen Haltestifts **(18)** derart gekreuzt zu werden, dass der zweite Flansch **(27)** den Einlasskanal **(37)** kreuzt, wohingegen der erste Flansch **(26)** den Einlasskanal **(37)** nicht kreuzt,
wobei jedes vertikale Segment **(35)** und jedes horizontale Segment **(36)** so geformt sind, dass sie eine Breite aufweisen, die sich dem Außendurchmesser jeder jeweiligen umlaufenden Nut **(29)** durch Überschuss annähert, um es der jeweiligen umlaufenden Nut **(29)** zu ermöglichen, innerhalb des vertikalen Segments **(35)** und des horizontalen Segments **(36)** frei zu gleiten,
wobei jeder obere Führungsschlitz **(34)** einen Einlasskanal **(37)** aufweist, der nach oben offen ist und der teilweise durch die Zwischenwand **(32)** und teilweise durch einen oberen Flügel der horizontalen Flügel **(33)** erhalten wird;
wobei der Befestigungskopf **(28)** jedes Haltestifts **(18)** des oberen Paars **(16)** von oben durch den Einlasskanal **(37)** einführbar ist, der oberhalb des jeweiligen oberen Führungsschlitzes **(34)** offen ist,
wobei der Getränkeverkaufsautomat **(1)** ferner lösbare Verriegelungsmittel **(40)** umfasst, die zum Verriegeln der Schäfte **(22)** in dem Führungsschlitz **(34)** bereitgestellt werden.

2. Verkaufsautomat nach Anspruch **1, dadurch gekennzeichnet, dass** die lösbaren Verriegelungsmittel einen Anschlagstift **(40),** der durch eines von der Abgabeanordnung **(9)** und der Halteplatte **(30)** getragen wird, und einen Haltesitz umfassen, der auf eine lösbare Weise durch den Stift **(40)** in Eingriff genommen wird und auf dem anderen von der Abgabeanordnung **(9)** und der Halteplatte **(30)** erhalten wird.

3. Verkaufsautomat nach einem der vorstehenden Ansprüche,
**dadurch gekennzeichnet, dass** die geformte Halteplatte **(30)** mit der Tür **(8)** stabil verbunden ist, und **dass** die Abgabeanordnung **(9)** eine Befestigungsstruktur **(12)** umfasst, mit der die Schäfte **(22)** der Haltestifte **(18)** freitragend stabil verbunden sind.

4. Verkaufsautomat nach einem der vorstehenden Ansprüche,
**dadurch gekennzeichnet, dass** jeder Schaft **(22)** einen Bolzen umfasst und der Befestigungskopf **(28)** eine Mutter **(23)** umfasst, die auf den Bolzen geschraubt ist.

## Revendications

1. Distributeur automatique de boissons **(1)** comprenant un corps en forme de boîte **(3)** délimitant une chambre de logement **(4)** et une ouverture **(6)** pour l'accès à ladite chambre **(4) ;** une porte **(8)** pour fermer ladite ouverture d'accès **(6)** ; au moins un ensemble de distribution **(9)** ayant des corps pour contenir/mélanger lesdites boissons et un moyen de liaison pour relier ledit ensemble de distribution **(9)** à ladite porte de fermeture **(8)** ou audit corps en forme de boîte **(3),** ledit moyen de liaison comprenant un dispositif d'accouplement et de verrouillage rapide **(10)** ; le dispositif d'accouplement et de verrouillage rapide **(10)** comprenant :
- une paire supérieure **(16)** de broches de rétention **(18)** et une paire inférieure **(19)** de broches de rétention **(18)** espacées verticalement l'une de l'autre, chaque broche de rétention **(18)** étant reliée de manière stable à l'un parmi ledit ensemble de distribution **(9)** et ladite porte de fermeture **(8)** ou ledit corps en forme de boîte **(3),** et
- une plaque de rétention profilée **(30)** reliée de manière stable entre l'autre parmi ledit ensemble de distribution **(9)** et ladite porte de fermeture **(8)** ou ledit corps en forme de boîte **(3),** la plaque de rétention profilée **(30)** étant en forme de C et comprenant une paroi intermédiaire verticale **(32)** et deux ailes horizontales **(33)** reliées de manière stable l'une à l'autre entre ledit ensemble de distribution **(9)** et ladite porte de fermeture **(8)** ou ledit corps en forme de boîte **(3),**
la plaque de rétention profilée **(30)** délimitant pour chaque broche de rétention **(18)** au moins une fente de guidage **(34)** pour guider la broche de rétention correspondante **(18),**
chaque fente de guidage **(34)** comprenant un segment vertical **(35),** un segment horizontal **(36)** et un passage d'entrée **(37)** agencé au-dessus du segment vertical **(35)** et communiquant avec le segment vertical **(35)** lui-même,
la plaque de rétention **(30)** délimitant des fentes de guidage supérieures **(34)** adaptées pour recevoir les broches de rétention **(18)** de ladite paire supérieure **(16)** et des fentes de guidage inférieures **(34)** adaptées pour recevoir les broches de rétention **(18)** de ladite paire inférieure **(19),**
chaque broche de rétention **(18)** comprenant un arbre **(22)** qui vient en prise avec la fente de guidage respective **(34)** de manière coulissante, et une tête d'attache **(28)** positionnée en butée contre une partie de ladite plaque profilée **(30)** délimitant la fente de guidage respective **(34)** et pouvant être insérée à travers le passage d'entrée respectif **(37)** ;
chaque dite tête d'attache **(28)** comprenant une partie **(24)** pourvue d'une rainure circonférentielle **(29)** mise en prise de manière coulissante par des parties de ladite plaque de rétention profilée **(30)** délimitant la fente de guidage respective **(34),** la rainure circonférentielle **(29)** étant délimitée latéralement entre une première bride circulaire **(26)** et une seconde bride circulaire **(27),** la seconde bride **(27)** ayant un diamètre externe inférieur au diamètre externe de la première bride **(26),**
dans lequel chaque passage d'entrée **(37)** est conçu pour être traversé par la tête d'attache **(28)** de la broche de rétention correspondante **(18)** de telle sorte que la seconde bride **(27)** traverse le passage d'entrée **(37)** tandis que la première bride **(26)** ne traverse pas le passage d'entrée **(37),** dans lequel chaque segment vertical **(35)** et chaque segment horizontal **(36)** sont formés de manière à avoir une largeur approchant par excès le diamètre externe de chaque rainure circonférentielle correspondante **(29)** de manière à permettre à la rainure circonférentielle correspondante **(29)** de coulisser librement à l'intérieur du segment vertical **(35)** et du segment horizontal **(36),**
chaque fente de guidage supérieure **(34)** ayant un passage d'entrée **(37)** ouvert vers le haut et obtenu en partie à travers la paroi intermédiaire **(32)** et en partie à travers une aile supérieure desdites ailes horizontales **(33)** ;
la tête d'attache **(28)** de chaque broche de rétention **(18)** de ladite paire supérieure **(16)** pouvant être insérée par le haut à travers ledit passage d'entrée **(37)** qui est ouvert vers le haut de ladite fente de guidage supérieure respective **(34),**
dans lequel le distributeur automatique de boissons **(1)** comprend en outre un moyen de verrouillage amovible **(40)** destiné à bloquer lesdits arbres **(22)** dans ladite fente de guidage **(34).**

2. Distributeur automatique selon la revendication **1, caractérisé en ce que** le moyen de verrouillage amovible comprend une broche d'arrêt **(40)** soutenue par l'un parmi ledit ensemble de distribution **(9)** et ladite plaque de rétention **(30)** et un siège de rétention mis en prise de manière amovible par ladite broche **(40)** et obtenu sur l'autre parmi ledit ensemble de distribution **(9)** et ladite plaque de rétention **(30).**

3. Distributeur automatique selon l'une quelconque des revendications précédentes, **caractérisé en ce que** ladite plaque de rétention profilée **(30)** est reliée de manière stable à ladite porte **(8)** et **en ce que** ledit ensemble de distribution **(9)** comprend une structure d'attache **(12),** à laquelle les arbres **(22)** desdites broches de rétention **(18)** sont reliés de manière stable en porte-à-faux.

4. Distributeur automatique selon l'une quelconque des revendications précédentes, **caractérisé en ce que** chacun desdits arbres **(22)** comprend une tige et ladite tête d'attache **(28)** comprend un écrou **(23)** vissé sur ladite tige.
